# FASCICULE DE BREVET EUROPEEN

(11) **EP 2 355 414 B1**
(45) Date de publication et mention de la délivrance du brevet: **19.06.2013**
(21) Numéro de dépôt: 11151250.5
(22) Date de dépôt: 18.01.2011
(51) Int. Cl.: H04L 12/28, H04L 12/24

(54) **Procédé de configuration d'une installation domotique**
Konfigurationsverfahren einer Heimanlage
Method for configuring a home-automation device

(30) Priorité: 28.01.2010 FR 1050599
(43) Date de publication de la demande: 10.08.2011
(73) Titulaire: Somfy SAS, 74300 Cluses (FR)
(72) Inventeur: Klasson, Mattias, 44339, Lerum (SE); Spanberger, Samuel, 44833, Floda (SE); Carlsson, Tommy, 41832, Goteborg (SE); Magnusson, Christian, 43368, Savedalen (SE)
(74) Mandataire: Novaimo

(56) Documents cités:
- EP-A1- 1 410 360

## Description

L'invention concerne le domaine du bâtiment et plus particulièrement des façades dites dynamiques, comportant des écrans de protection solaire motorisés mobiles et ajustables.

Les façades dynamiques permettent d'assurer le confort lumineux dans le bâtiment et de réaliser des économies en énergie en régulant l'apport thermique à travers les ouvertures de la façade. Les écrans peuvent être des stores d'intérieur, par exemple des stores vénitiens à lames orientables, ou des stores enroulables, ou des écrans extérieurs, des panneaux rigides orientables, etc. Plusieurs écrans peuvent être situés au niveau d'une même ouverture.

Au niveau de chaque ouverture équipée d'un ou plusieurs écrans, des actionneurs pilotent le mouvement de ces écrans mobiles en rotation ou en translation. Les actionneurs sont gérés de manière centrale au niveau de la pièce, de l'étage, de la façade à laquelle ils appartiennent ou simplement au niveau du bâtiment. Un moyen de commande central récupère également un certain nombre d'informations auprès de divers capteurs positionnés à l'intérieur et à l'extérieur du bâtiment (capteurs de présence, de température, de luminosité, etc.).

Chaque actionneur peut également être piloté individuellement ou dans un groupe par l'intermédiaire d'un point de commande locale.

Chaque actionneur est identifié par un code ou adresse qui lui est propre. Pour permettre de configurer les liens entre le moyen de commande central et les actionneurs, ou entre un point de commande locale et un actionneur, il est nécessaire de connaître cette adresse ou du moins d'isoler l'actionneur pour s'adresser à lui seul au moins dans une phase d'apprentissage. La problématique est très présente dans le cas de communication sans fil, notamment en radio.

Il est par ailleurs très utile de repérer la localisation de chaque écran mobile dans le bâtiment afin de créer des zones de gestion auxquelles sont associés les actionneurs par groupes, de manière à permettre par exemple des manoeuvres automatiques en fonction de données temporelles ou climatiques.

Une première méthode d'identification d'un actionneur est décrite dans le brevet EP1274199. Selon ce brevet, un produit normalement commandé par radio peut, dans une phase d'apprentissage, être également commandé ou configuré à partir du secteur, par interruptions de la tension d'alimentation. Une séquence spécifique de coupure de la tension d'alimentation permet ainsi de s'adresser à un seul actionneur, si tant est qu'il dispose d'une ligne d'alimentation qui lui est dédiée et à laquelle l'installateur puisse accéder. En pratique, il existe de nombreuses installations pour lesquelles cette méthode est difficile à mettre en oeuvre.

Une deuxième méthode est décrite dans la demande de brevet EP1410360. Au cours d'une phase d'apprentissage ou de configuration, les récepteurs radio des actionneurs non encore appariés avec un point de commande ou récepteurs vierges, s'ordonnent de manière aléatoire ou semi-aléatoire (par exemple en utilisant des arbres dichotomiques), de manière à ne pas réagir simultanément à une commande. Le procédé peut être répété si besoin si deux actionneurs réagissent simultanément. L'objectif est donc d'isoler un actionneur parmi n dans l'installation, dans le but de l'appairer, dès qu'il est repéré individuellement, avec un point de commande.

Le procédé peut être relativement long lorsqu'il s'agit d'une installation dans un bâtiment tertiaire comprenant plusieurs dizaines d'actionneurs. Par ailleurs, l'appairage est généralement une étape ultime dans la configuration d'une installation, en particulier dans le tertiaire, où les télécommandes ne sont réellement mises en place qu'au moment de la livraison du bâtiment industriel.

Une troisième méthode est décrite dans la demande de brevet EP1576430. Dans cette demande, le code d'identification d'un actionneur est inscrit sur le boîtier de l'actionneur ou reporté sur le caisson qui masque l'actionneur (par exemple grâce à une étiquette autocollante). Il doit ensuite être saisi, manuellement ou à l'aide d'un outil de saisie (par exemple un scanner de codes barres). Les étiquettes peuvent être repositionnées sur un plan schématique de l'installation pour procéder de manière ultérieure à l'appairage.

D'autres demandes de brevet sur le même sujet, comme par exemple DE202005019992, proposent la mise en place de lectures du code d'identification en utilisant des technologies diverses : RFID, codes barres, ultrasons, IR, etc.

En pratique, aucune de ces solutions n'est réellement acceptable : l'impact sur la production et la distribution est un frein à leur utilisation, d'autant plus dans le cas particulier où les canaux de distribution et de vente des actionneurs et des points de commande sont différentiés. Les différentes solutions ne sont pas nécessairement compatibles, le choix d'une technologie côté actionneur et d'une autre côté commande impliquant le besoin de plusieurs outils de lecture et de passerelles communes. Les technologies permettant une lecture du code d'identification de l'actionneur alors que celui-ci est entièrement masqué facilitent la logistique, mais rajoutent nécessairement au coût de l'installation.

Il existe donc un besoin d'une solution d'identification et de localisation des écrans de protection solaire et des actionneurs qui leur correspondent dans un bâtiment qui soit simple, fiable et rapide.

Le but de l'invention est de fournir un procédé de configuration remédiant aux inconvénients ci-dessus et améliorant les procédés de configuration connus de l'art antérieur. En particulier, l'invention permet de mettre en oeuvre un procédé de configuration simple, fiable, rapide et intuitif.

Le procédé selon l'invention est défini par la revendication 1.

Différents modes d'exécution du procédé sont définis par les revendications dépendantes 2 à 13.

Selon l'invention, un dispositif de configuration est défini par la revendication 14.

L'invention concerne aussi un programme informatique comprenant un moyen de code de programme informatique adapté à la réalisation des étapes du procédé de configuration défini précédemment, lorsque le programme est exécuté sur un ordinateur.

L'invention sera mieux comprise à la lecture de la description qui va suivre, donnée uniquement à titre d'exemple et faite en se référant aux dessins annexés sur lesquels :
La figure 1 représente un bâtiment dans lequel un procédé de configuration selon l'invention peut être mis en oeuvre.
La figure 2 représente une installation domotique dans laquelle un procédé de configuration selon l'invention peut être mis en oeuvre.
La figure 3 représente un ordinogramme d'un premier mode d'exécution d'un procédé de configuration selon l'invention.
Les figures 4 à 6 sont des représentations schématiques d'un écran d'interface homme-machine d'un dispositif de configuration permettant de mettre en oeuvre le procédé de configuration selon l'invention.
La figure 7 représente un ordinogramme d'une procédure de fin de configuration d'une partie d'installation.

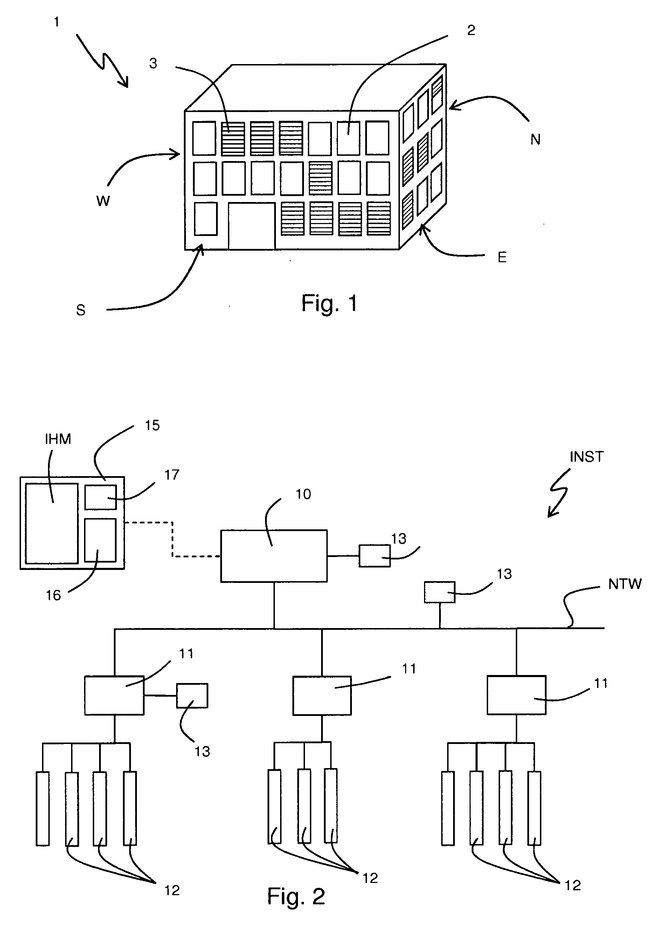

Un bâtiment tertiaire 1, représenté sur la figure 1, comprend une pluralité d'ouvertures (notamment des fenêtres) 2 disposées sur des façades S, E, N, W (ces deux dernières n'étant pas visibles). Les ouvertures sont équipées d'écrans mobiles 3, notamment des écrans de fermeture, d'occultation ou de protection solaire, une partie de ceux-ci étant représentée en position fermée par des hachures horizontales sur les façades S et E.

Les écrans de protection solaire mobiles sont chacun pilotés par un actionneur 12, ce dernier permettant l'ouverture et la fermeture automatisée de l'écran. Les actionneurs sont généralement masqués dans des rails ou des caissons lorsqu'ils sont installés et sont alors difficilement accessibles par l'intérieur ou l'extérieur du bâtiment.

L'automatisation du bâtiment, notamment des écrans via leurs actionneurs 12, basée sur la présence d'un moyen de commande central 10, de moyen de commandes locaux 11 et de capteurs divers 13 (présence, luminosité, température, etc), permet de gérer des paramètres du bâtiment notamment des paramètres de confort comme la thermique dans le bâtiment. Pour cela, les différents équipements (actionneurs, moyens de commande, capteurs) communiquent entre eux par le biais de réseaux NTW sans fil (radio notamment) ou filaires (bus câblés, courants porteurs). Un exemple d'installation est représenté en figure 2.

Le terme d'actionneur utilisé dans cette demande inclut notamment la partie électronique ou électromécanique permettant le contrôle du mouvement de l'écran ou le contrôle d'état d'une charge, par exemple d'une lampe, mais également les moyens électroniques de dialogue avec les différents autres équipements de l'installation.

Pour piloter chaque actionneur, il est nécessaire que les moyens de commande puissent connaître un code d'identification ou adresse propre à chaque actionneur. On note @i le code d'identification ou l'adresse d'un actionneur i. Par la suite, on désigne une adresse ou un code d'identification par le terme « adresse ».

Lors d'une installation ou au préalable, il est possible de régler un actionneur individuellement, sans avoir besoin de connaître son adresse. Régler un actionneur individuellement signifie configurer les positions de mouvement extrêmes ou fins de course, son sens de rotation ou d'autres paramètres nécessaires à son fonctionnement sur le site d'installation en lien avec l'écran ou les écrans qu'il pilote. Le réglage peut avoir lieu en usine, éventuellement lors de l'intégration de l'actionneur au niveau de la structure de l'écran qu'il va piloter.

L'invention est préférentiellement appliquée lorsque l'installation INST est réalisée sur le site, c'est-à-dire lorsque les écrans mobiles sont installés au niveau des ouvertures du bâtiment.

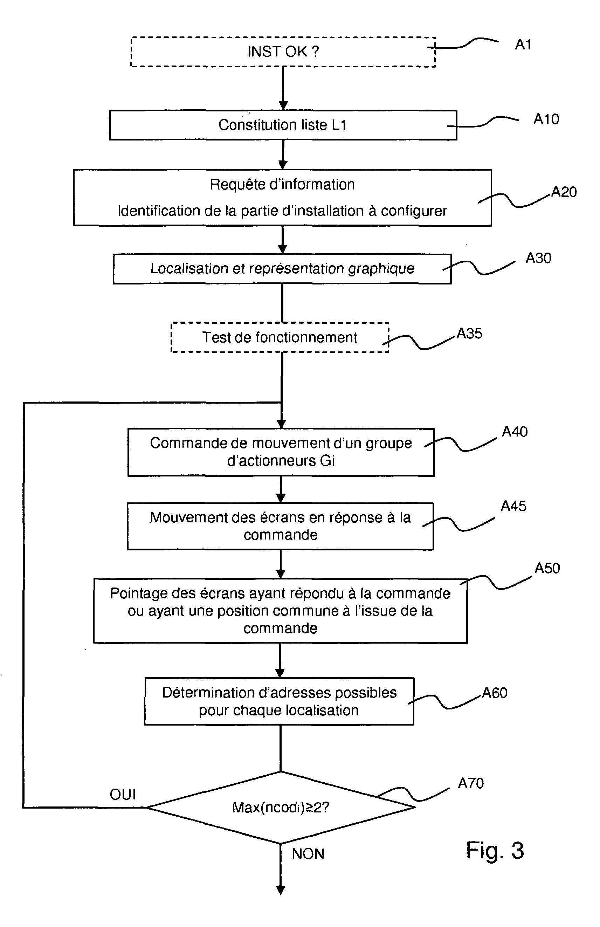

Un premier mode de réalisation simple du procédé de configuration selon l'invention est décrit ci-après en référence à la figure 3. Il est mis en oeuvre par un dispositif de configuration ou moyen de configuration 15 comprenant des moyens informatiques, notamment une interface IHM (écran et moyens d'interaction avec celui-ci, par exemple une souris ou un panneau tactile), des moyens de calcul 16, comme une unité logique de traitement, et des moyens 17 d'émission et de réception d'information et de commande. Le moyen de configuration 15 peut être un PC, un PDA ou un outil dédié à la configuration d'une telle installation. Il se raccorde au réseau directement ou par l'intermédiaire d'un des moyens de commande, par voie filaire ou non filaire.

Au cours d'une étape A1 optionnelle, le moyen de configuration requiert une validation des conditions suivantes :
- les actionneurs de la façade sont réglés,
- les actionneurs sont alimentés.

Au cours d'une étape A10, une requête d'identification est initiée par le moyen de configuration, par exemple un message est émis à l'attention des actionneurs de l'installation et notamment ceux de la façade à configurer. Les actionneurs, du moins ceux non encore localisés dans l'installation, fournissent alors chacun au moins leur adresse au moyen de configuration. Un fichier de paramètres relatifs à chaque actionneur, par exemple contenant au moins son type (c'est-à-dire quel type d'équipement domotique, par exemple quel type d'écran, il est destiné à piloter), peut également être transmis par chaque actionneur à ce stade ou ultérieurement. Cette procédure est connue sous le nom de « Découverte ».

Une liste des actionneurs est alors constituée dans le moyen de configuration. En pratique, la liste des actionneurs comprend :
- soit les adresses des seuls actionneurs de la façade. Ce cas correspond notamment à un câblage des différents actionneurs par façade, prévu lors de l'installation du réseau câblé.
- soit les adresses des différents actionneurs répondant à la requête d'identification. Dans le cas d'une installation radio bidirectionnelle, d'autres actionneurs que ceux de la façade choisie vont répondre également à la requête. A l'issue de l'étape A10, le moyen de configuration affiche donc le nombre d'actionneurs ayant fourni leur adresse.

Une première liste L1 est ainsi constituée avec les adresses récupérées par le moyen de configuration. Chaque adresse de la liste est l'adresse d'un actionneur donné de l'installation.

Au cours d'une étape A20, le moyen de configuration affiche un certain nombre de requêtes d'informations sur des critères physiques du bâtiment et de la façade, par exemple du type :
- quelle est la localisation de la façade (requête permettant ensuite de reconstituer le bâtiment entier) ?
- combien la façade comporte d'étages équipés d'écrans automatisés ?
- combien d'ouvertures sont présentes au niveau de chaque étage ?
- éventuellement combien d'écrans mobiles sont présents sur la façade ou dans l'installation ?

Le procédé est basé sur un premier repérage des ouvertures. En effet, le procédé étant basé sur une observation de la façade (vue de l'extérieur ou vue de l'intérieur), il est plus simple de raisonner en termes d'ouvertures, les actionneurs étant eux-mêmes masqués. Au cours du déroulement du procédé selon l'invention, l'installateur doit observer des mouvements ou des positions des écrans mobiles au niveau des différentes ouvertures et non les actionneurs eux-mêmes. En pratique, il est possible de raisonner sur les ouvertures ou sur les actionneurs. L'installateur répond à ces requêtes d'information afin de passer à l'étape suivante du procédé.

L'étape précédente A20 permet de définir une liste de localisations pour les différents écrans de la façade à configurer. Ainsi, dans cette étape, une identification de l'ensemble des localisations des écrans composant la partie de l'installation à configurer est réalisée. Le moyen de configuration affecte à chaque localisation une référence unique. Les étapes suivantes du procédé vont permettre de faire correspondre à chaque référence de localisation, une seule adresse d'actionneur.

En fonction des réponses à l'étape A20 précédente, le moyen de configuration réalise et affiche sur un écran 30 de l'interface homme-machine IHM du moyen de configuration, dans une première zone d'écran 24, une représentation graphique des localisations des écrans équipant les fenêtres ou ouvertures de la façade au cours d'une étape A30. Cette représentation graphique peut être schématique. Chaque écran équipant une ouverture est repéré par exemple par une icône 20 carrée sur l'écran, les écrans d'un étage étant représentées sur une même ligne, les étages successifs étant représentés sur des lignes consécutives. La dimension des icônes est adaptée pour permettre l'affichage de l'ensemble des ouvertures de la façade dans la première zone de l'écran. Chaque icône représente une localisation d'un écran et donc une localisation correspondant à un actionneur de manoeuvre de cet écran.

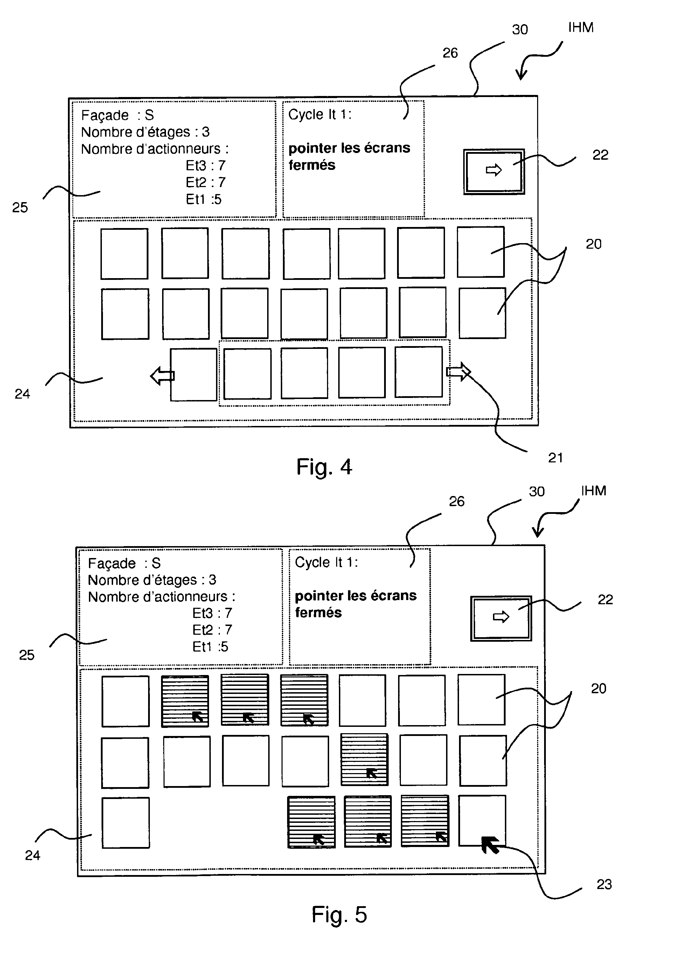

La représentation schématique, sous forme d'une matrice d'icones, permet de symboliser une vue d'ensemble des ouvertures de la façade et donc des écrans et actionneurs. Elle est représentée en figure 4 et suivantes. Une deuxième zone d'écran 25 permet de rappeler les critères physiques de la façade à configurer, une troisième zone d'écran 26 les instructions des différentes étapes de la configuration.

Préférentiellement, l'installateur a la possibilité de déplacer certaines icônes de manière à obtenir une représentation schématique la plus proche possible de la répartition des ouvertures sur la façade. Ainsi, la présence de portes, le décalage des ouvertures sur la façade d'un étage à l'autre ou toute autre particularité de la façade peut être pris en compte sur cette représentation schématique. Cette possibilité est symbolisée par la présence de flèches 21 de déplacement d'une ou plusieurs icônes.

On associe, par exemple dans une mémoire, à chaque icône, donc à chaque localisation d'écran, une liste des adresses possibles d'actionneur motorisant cet écran. A ce stade, la liste des adresses possibles correspond à l'ensemble des adresses des actionneurs de la première liste.

Au cours d'une étape A35 optionnelle, une routine de test des différents actionneurs est mise en oeuvre, de manière à vérifier si tous les actionneurs de la façade fonctionnent correctement. La routine peut comprendre une commande d'actionnement correspondant à un mouvement vers une position particulière, par exemple une fermeture de 30%, adressée à l'ensemble des actionneurs de la première liste. A l'issue de la commande d'actionnement, c'est-à-dire lorsque l'actionnement est terminé, l'installateur peut valider simplement si tous les actionneurs ont fonctionné. Les écrans peuvent alors être pilotés vers leur position ouverte.

Au cours d'une étape A40, le moyen de configuration sélectionne parmi la première liste L1, au moins un premier groupe G1 d'écrans mobiles auquel il va transmettre un ordre de commande d'actionnement, par exemple un ordre de commande de mouvement vers une position fermée. Ce premier groupe d'actionneurs G1 correspond donc à une première sous-liste SL1 d'adresses d'actionneurs. Le moyen de configuration ne sait pas à ce stade du procédé où les écrans mobiles sont localisés sur la façade voire ne sait pas si les écrans mobiles sont localisés sur la façade. La première sous-liste correspond à une partie aléatoire de la première liste, préférentiellement environ la moitié de la première liste.

Les actionneurs ayant reçu la commande d'actionnement placent les écrans dans la position particulière requise par la commande d'actionnement (par exemple fin de course haut ou fin de course bas) ou effectuent le mouvement requis par la commande. L'objectif de cette étape A45 est de permettre à l'utilisateur d'identifier visuellement facilement quels actionneurs ont réagi à la commande qui vient d'avoir lieu ou quels écrans sont placés dans une position prédéfinie, par exemple la position fermée. Cette position est indiquée à l'installateur dans la troisième zone d'écran.

Au cours d'une étape A50, l'installateur repère visuellement, au niveau de la façade, les écrans placés dans la position particulière prédéfinie. Suite à ce repérage, l'installateur repère puis désigne les localisations correspondant aux écrans ayant réagi à l'ordre de commande ou se trouvant dans une position déterminée à l'issue de la commande de mouvement, c'est-à-dire lorsque le mouvement est terminé. Cette désignation peut être réalisée par pointage, sur l'interface homme-machine du moyen de configuration, des icônes associées aux écrans. Cette étape est représentée schématiquement à la figure 5, correspondant à la configuration de la façade S telle qu'elle apparaît à la figure 1: les flèches de pointage 23 en biais symbolisent l'action de pointage de l'installateur sur les icones associées aux ouvertures pour lesquelles les écrans sont placés dans une position fermée. Ces flèches sont représentées plus petites une fois que l'action de pointage est terminée. Une fois pointées, les icônes, ou du moins leur apparence, peuvent être modifiées, par exemple en symbolisant le positionnement d'un écran dans une position fermée. Sur la figure 5, les icônes sélectionnées sont hachurées. Un simple changement de couleur peut également permettre à l'installateur de vérifier aisément la correspondance entre la façade et sa représentation graphique sur l'interface du moyen de configuration. Un nouveau pointage d'une des icônes permet de désélectionner celle-ci, pour corriger une éventuelle erreur.

Une fois cette étape terminée, l'installateur valide ses actions de pointage pour passer à l'étape suivante, en pointant par exemple sur une flèche de validation 22. Lors de l'étape A60, le moyen de configuration utilise les résultats des étapes précédentes pour actualiser, pour chaque localisation d'écran, la liste d'adresses possibles d'actionneurs. Pour ce faire, le moyen de configuration croise la liste des adresses possibles correspondant à chaque localisation et la liste des adresses des actionneurs ayant répondu à la commande.

En effet, aux localisations effectivement repérées par pointage sur les icônes correspondantes correspondent des adresses d'actionneurs appartenant nécessairement à la première sous-liste des adresses, celle des actionneurs à qui a été adressée la commande. La première sous-liste devient donc la liste des adresses possibles pour les localisations repérées au cours de cette étape A50 par l'installateur. Pour les localisations restantes, la liste des adresses possibles correspond à la première liste excluant les adresses de la première sous-liste. Alternativement et de manière préférée, le moyen de configuration sélectionne parmi la première liste au moins trois groupes d'actionneurs auxquels il va transmettre des commandes d'actionnement différentes, par exemple une commande de mouvement vers une position ouverte, une commande d'actionnement vers une position fermée et pas de commande, les trois groupes étant disjoints mais complémentaires. Les écrans associés aux actionneurs ne recevant pas de commande d'actionnement restent dans leur position précédente, ainsi que ceux pour lesquels la commande d'actionnement correspond à leur position présente. Cette alternative permet d'augmenter les chances de déterminer pour chaque ouverture localisée à l'écran du moyen de configuration une seule adresse possible. Elle permet donc d'accélérer le procédé de localisation, non seulement en termes de localisation des actionneurs mais elle permet également de gagner en temps de réponse dans la mesure où elle évite une étape de retour des écrans de la façade dans une position initiale déterminée.

Ensuite, dans une étape A70, on teste le nombre d'adresses possibles ncodᵢ pour chaque localisation de la partie d'installation à configurer. Si max(ncodᵢ)≥2, on boucle alors sur l'étape A40.

Lors de la réitération de l'étape A40, le moyen de configuration détermine une seconde sous-liste SL2 d'adresses, c'est-à-dire un second groupe G2 d'actionneurs auquel il envoie une commande, par exemple une commande de mouvement en position ouverte. La seconde sous-liste peut être déterminée de manière aléatoire, mais il est préférable qu'elle tienne compte de la première sous-liste. La seconde sous-liste peut recouvrir partiellement la première sous-liste, préférentiellement elle la recouvre de moitié. Dans le cas où elle comprend toutes les adresses de la liste complémentaire à la première sous-liste, l'exclusion des adresses non affectées (c'est-à-dire appartenant à des actionneurs n'appartenant pas à la partie d'installation à configurer) est simplifiée. Cette exclusion peut également être reportée aux étapes suivantes, en formant progressivement une liste des adresses non affectées. La seconde sous-liste comprend alors préférentiellement la moitié des adresses de la première sous-liste et la moitié des adresses de cette liste complémentaire.

Alternativement et de manière préférée, le moyen de configuration sélectionne parmi la première liste au moins trois groupes d'actionneurs auxquels il va transmettre des commandes d'actionnement différentes, les trois groupes étant disjoints mais complémentaires. Les écrans associés aux actionneurs ne recevant pas de commande d'actionnement restent dans leur position précédente, ainsi que ceux pour lesquels la commande d'actionnement correspond à leur position présente.

Au préalable, tous les actionneurs identifiés pourront avoir reçu un ordre de retour à une position par défaut pour simplifier la visualisation des déplacements des écrans sur la façade. Si aucun ordre de retour à une position par défaut n'est prévu, il est préférable que la commande fournie aux actionneurs de la seconde sous-liste soit une commande différentiée de la commande fournie aux actionneurs de la première sous-liste lors de l'itération précédente.

Sans retour systématique à une position par défaut, la relation avec la position de l'écran à l'étape précédente, repérée par l'installateur, peut permettre d'isoler par chance un nombre réduit de possibilités d'adresses pour certains actionneurs. Ainsi il est possible que le procédé de configuration converge plus rapidement vers la solution recherchée, à savoir : déterminer une seule adresse possible d'actionneur par localisation.

L'utilisateur identifie alors au cours d'une nouvelle étape A50 quels écrans sont placés dans une position prédéfinie, indiquée à l'installateur dans la troisième zone d'écran, par exemple la position fermée. Le procédé passe ensuite de nouveau par l'étape A60.

Cette seconde itération des étapes A40 à A 60 permet d'affiner sensiblement la recherche d'association entre une localisation et une adresse d'actionneur. En croisant les résultats obtenus lors de la première et de la seconde itération, les listes d'adresses possibles pour chaque localisation diminuent sensiblement de moitié.

Il est cependant possible que par chance, une seule adresse d'actionneur soit rapidement affectée à une localisation (ou plusieurs localisations dans le cas où l'actionneur pilote simultanément plusieurs écrans placés devant des ouvertures distinctes). Dans ce cas, le procédé de localisation est également accéléré, cet actionneur identifié et son adresse étant écartés des sous-listes d'adresses d'actionneurs.

Les étapes A40 à A60 sont réitérés, tant qu'un nombre (entier) d'adresses ncodᵢ dans la liste des adresses possibles pour au moins une localisation i est supérieur ou égal à 2.

Pour un cas simple pour lequel les actionneurs de la première liste correspondent bien à l'ensemble des actionneurs de la façade à configurer, le nombre d'itérations maximal au cours du procédé décrit se déduit du nombre d'adresses à affecter par la relation mathématique suivante :
Nombre maximal d'itérations = n pour un nombre d'adresses compris entre 2ⁿ⁻¹ et 2ⁿ.

Un deuxième mode de réalisation plus élaboré réduit encore le nombre d'itérations maximal nécessaires pour associer chaque localisation aux différents actionneurs de la façade.

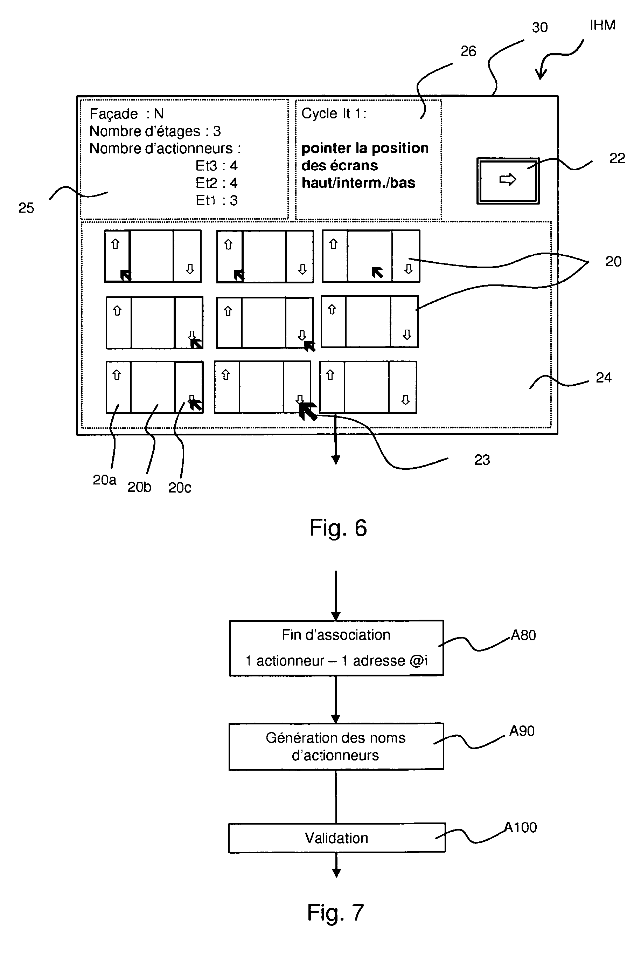

Dans celui-ci, les actionneurs peuvent recevoir des commandes de positionnement plus précises, par exemple vers une première position extrême, une deuxième position extrême et une position intermédiaire. Ce mode de réalisation est représenté en figure 6 au cours d'une étape A50 de configuration de la façade N.

Les icônes de la représentation graphique schématique des fenêtres ou ouvertures de la façade sont alors divisées en 3 cases 20a, 20b, 20c, une pour chaque position (les positions hautes et basses étant symbolisées par les cases droite et gauche avec des flèches vers le haut ou vers le bas, une position médiane par la case centrale) et l'installateur repère et pointe la position réelle de l'écran dans la case représentative à l'écran. Les différentes positions peuvent également être symbolisées par une répartition verticale des cases.

La convergence vers la localisation unique de chaque actionneur est ainsi favorisée, le nombre de cycles de réitération des étapes A40-A60 est diminué.

Ce mode de réalisation convient bien à l'installation de petits bâtiments du tertiaire, comprenant 2 à 5 étages. Pour les bâtiments plus hauts, le premier mode de réalisation est préféré. En effet, un installateur installé au dehors du bâtiment au pied de la façade peut ne pas pouvoir distinguer clairement entre une position extrême et une position intermédiaire, en particulier pour les étages supérieurs.

De manière préférée, le moyen de configuration offre le choix à l'installateur entre les différents modes de réalisation, qu'il peut ainsi sélectionner de manière adaptée au bâtiment à configurer.

D'autres modes de réalisation peuvent être combinés à ceux précédemment décrits, tout en rentrant dans le périmètre de l'invention.

La position intermédiaire décrite précédemment peut être une position de déploiement de l'écran à mi-course entre les positions extrêmes, mais elle peut également correspondre à une position ouverte des lames d'un store vénitien déployé, la position extrême correspondant alors au store vénitien déployé, lames fermées.

Un troisième mode de réalisation, similaire au précédent, peut prévoir des commandes de mouvement vers plusieurs positions intermédiaires en plus des positions extrêmes.

Un quatrième mode de réalisation peut comprendre une étape de mouvement de court aller-retour de l'écran (ou ouverture-fermeture des lames d'un vénitien) suite à une commande au cours de l'étape A40. Ce mouvement peut être répété par les actionneurs pour aider l'installateur à repérer les écrans ayant reçu la commande.

Ce mode de réalisation, également plus adapté pour les bâtiments de petite taille, permet de gagner du temps de configuration sur les temps de réponse aux commandes, c'est-à-dire sur les temps de déplacement des écrans d'une position à une autre.

Lorsque le moyen de configuration a déterminé une seule adresse possible d'actionneur par localisation, un message de fin de configuration est fourni de manière systématique à l'installateur. Les différentes icônes sont toutes marquées comme identifiées. Elles sont repérées par ailleurs avec les références de localisation fournies par le moyen de configuration.

Il est possible que deux ouvertures ou plus correspondent à un seul et même actionneur, les deux icônes correspondantes peuvent alors avoir une référence commune qui leur est affectée à l'issue du procédé.

Après cette étape A80 de fin d'association, l'installateur est prié de nommer les différents actionneurs au cours d'une étape A90. Il est ainsi possible de leur affecter un nom intuitif, dépendant par exemple d'un repérage sur un plan du bâtiment (Pièce 3.2 - store 1, par exemple). Un dernière étape A100 valide la localisation des actionneurs et met en place l'organisation du réseau, par le transfert de clés de communication par exemple, et le verrouillage des actionneurs, qui ne répondront plus à une nouvelle requête de Découverte.

La localisation individuelle des actionneurs et l'apprentissage de leur positionnement sur la façade permettent de créer des zones de gestion, d'associer des capteurs, des points de commande aux différents actionneurs, et ceci, sans accès aux actionneurs.

Une représentation graphique de chaque façade configurée est également possible.

La méthode décrite offre donc beaucoup d'avantages et une simplicité de mise en oeuvre appréciable par rapport à l'état de l'art.

Lorsqu'il n'est pas possible à l'installateur de visualiser la façade complète, la méthode décrite ci-dessus est tout à fait applicable depuis l'intérieur du bâtiment. Dans ce cas, l'installateur doit aller de pièce en pièce pour repérer les écrans qui ont bougé suite à la commande de localisation. La visualisation par l'intérieur du bâtiment est également nécessaire dans le cas de stores intérieurs et façades à vitres teintées.

Préférentiellement, la configuration est réalisée par deux installateurs, l'un se plaçant à l'extérieur du bâtiment et l'autre à l'intérieur. La notation des actionneurs par rapport à un plan permet une communication plus facile entre les deux installateurs dans la mesure où leur point de vue est différent (droite-gauche inversées).

Dans le cas où l'installation est modifiée (changement d'un actionneur, expansion de l'installation), il suffit de renouveler la mise en oeuvre du procédé. Les seuls actionneurs non identifiés se signalent et le procédé se déroule rapidement. Dans le cas d'un changement d'actionneur, la nouvelle adresse est échangée avec l'adresse attribuée précédemment à l'icône de la façade.

La description ci-dessus est relative à la configuration d'un bâtiment façade par façade. Cependant, il est tout à fait possible de configurer un bâtiment différemment, par exemple étage par étage. Notamment lorsqu'il s'agit d'un bâtiment en construction, les différents écrans mobiles peuvent avoir été installés au niveau des ouvertures du bâtiment sans que les cloisons ne soient mises en place. Ainsi, de la même manière que pour un installateur placé à l'extérieur et considérant une façade, il est alors tout à fait possible et simple de se placer au centre d'un étage et d'avoir une vision panoramique des ouvertures.

La représentation graphique au niveau du moyen de configuration peut être légèrement différente : plusieurs lignes d'icônes peuvent être affichées, correspondant aux ouvertures de l'étage, avec mention de l'orientation des façades auxquelles elles appartiennent.

La méthode précédente a été décrite pour un cas où les actionneurs peuvent transmettre une adresse (par exemple dans le cas où les actionneurs sont équipés d'un récepteur bidirectionnel, qui leur permet d'émettre et de recevoir des informations ou des actionneurs câblés sur un réseau filaire bidirectionnel). Cependant, elle est également applicable au cas des actionneurs unidirectionnels, c'est-à-dire ne comprenant qu'un récepteur unidirectionnel capable de recevoir des informations mais non d'en émettre. Dans ce cas, les différents actionneurs sont appariés au préalable avec le moyen de configuration ou avec un moyen de commande local capable de dialoguer avec le moyen de configuration de manière bidirectionnelle. Ils ont donc échangé une information particulière qui permet un dialogue individuel entre le moyen de commande local et l'actionneur (en particulier, le moyen de commande central a fourni à chaque actionneur une adresse propre). Ces informations particulières sont incluses dans la première liste des adresses.

Le déroulement du procédé selon l'invention, basé sur cette première liste permet de déterminer également la localisation des actionneurs unidirectionnels sur la façade ou au niveau de l'étage. Une fois l'association entre actionneurs et localisations terminée, le moyen de configuration affecte artificiellement aux actionneurs unidirectionnels en place dans la partie d'installation à configurer un numéro de série virtuel ou une adresse virtuelle permettant de les différencier.

Les liens entre ces adresses virtuelles et la localisation des actionneurs sur la façade sont donc établis d'une manière très similaire aux liens entre les adresses réelles et les actionneurs dits bidirectionnels de l'installation. Ces deux méthodes sont complémentaires et peuvent être appliquées conjointement, si l'installation comprend à la fois des actionneurs à récepteurs monodirectionnels et bidirectionnels.

En pratique, le procédé peut utiliser une étape de découverte des adresses des actionneurs bidirectionnels et une option pour compléter la première liste peut être ensuite proposée à l'installateur.

Le nombre d'actionneurs et le nombre d'ouvertures ne sont pas nécessairement liés : d'une part, il est fréquent, dans les installations de façades dynamiques de bâtiment à usage tertiaire, qu'un même actionneur pilote simultanément plusieurs écrans (couvrant plusieurs ouvertures), d'autre part, il est possible de retrouver deux écrans (plutôt de type différents, installés à l'intérieur et à l'extérieur) pour une même ouverture.

Lorsque les ouvertures ou au moins certaines ouvertures sont équipées d'un écran intérieur et d'un écran extérieur, il est nécessaire de mettre en oeuvre deux fois le procédé selon l'invention : une fois pour les écrans intérieurs et une fois pour les écrans extérieurs. Alternativement, si le bâtiment est tel qu'il permet de distinguer une manoeuvre des écrans extérieurs et intérieurs depuis un même point de vue, chaque icône peut être partagée en 2 pour représenter les options écran intérieur/extérieur pour chaque ouverture. Il est également possible que le procédé soit réalisé simultanément par deux installateurs qui communiquent et valident entre eux les repérages. Chaque localisation correspond dans tous les cas à un seul écran mobile.

## Revendications

1. Procédé de configuration d'au moins une partie d'une installation domotique (1) comprenant une pluralité d'écrans mobiles (3) disposés au niveau d'ouvertures (2) d'un bâtiment, les écrans étant pilotés par des actionneurs (12) identifiés par une adresse, le procédé comprenant les étapes suivantes :
a) une étape de constitution d'une première liste d'adresses d'actionneurs de l'installation,
b) une étape d'identification de l'ensemble des localisations des écrans composant la partie de l'installation à configurer,
c) une étape d'association d'une liste d'adresses possibles d'actionneurs à chaque localisation d'écran,
d) une étape d'émission d'un ordre de commande de mouvement à l'attention de chaque actionneur d'un groupe d'actionneurs défini par une partie des adresses de la première liste,
e) une étape de désignation des localisations correspondant à un groupe d'écrans ayant réagi à l'ordre de commande et/ou se trouvant dans une position déterminée à l'issue de la commande de mouvement,
f) une étape d'actualisation des listes d'adresses possibles d'actionneurs pour chaque localisation,
les étapes d) à f) étant réitérées tant qu'au moins une liste d'adresses possibles d'actionneurs pour une localisation d'écran comprend plus d'une adresse d'actionneur.

2. Procédé de configuration selon la revendication précédente, **caractérisé en ce que** l'étape d'identification de l'ensemble des localisations d'écrans composant la partie de l'installation à configurer comprend une étape de génération d'une représentation graphique de la localisation des écrans de la partie de l'installation à configurer.

3. Procédé de configuration selon la revendication précédente, **caractérisé en ce que** l'étape de désignation des localisations correspondant à un groupe d'écrans ayant réagi à l'ordre de commande ou se trouvant dans une position déterminée à l'issue de la commande de mouvement comprend une étape de pointage de ceux-ci au niveau de la représentation graphique.

4. Procédé de configuration selon la revendication 3, **caractérisé en ce que** la représentation graphique de la localisation des écrans inclut au moins deux options de positionnement de l'écran et **en ce que** le pointage désigne simultanément la localisation de l'écran et le positionnement de l'écran.

5. Procédé de configuration selon l'une des revendications 2 à 4, **caractérisé en ce que** la représentation graphique comprend des icônes représentant les écrans mobiles et **en ce que** ces icônes sont déplaçables pour assurer une ressemblance visuelle entre la partie d'installation à configurer et la représentation graphique.

6. Procédé de configuration selon l'une des revendications précédentes, **caractérisé en ce que** le groupe d'actionneurs recevant l'ordre de commande à l'étape d) est défini aléatoirement lors d'une première mise en oeuvre de l'étape d), par exemple le nombre d'actionneurs du groupe est au moins sensiblement égal à la moitié du nombre d'adresses de la première liste.

7. Procédé de configuration selon l'une des revendications précédentes, **caractérisé en ce que**, lors d'une réitération de l'étape d), le groupe d'actionneurs est défini en fonction des listes obtenues à l'issue de l'étape f).

8. Procédé de configuration selon l'une des revendications précédentes, **caractérisé en ce que** lorsque la liste d'adresses possibles d'actionneurs pour une localisation ne contient qu'une seule adresse à l'issue de l'étape f), l'actionneur correspondant à cette adresse est exclu du groupe des actionneurs susceptibles de recevoir un ordre de commande lors d'une exécution ultérieure de l'étape d).

9. Procédé de configuration selon l'une des revendications précédentes, **caractérisé en ce qu'**il comprend une étape d'exclusion d'adresses d'actionneurs de l'installation n'appartenant pas à la partie de l'installation à configurer.

10. Procédé de configuration selon l'une des revendications précédentes, **caractérisé en ce qu'**il comprend une étape d'information au cours de laquelle l'installateur saisit des données relatives à la partie d'installation et à la localisation d'écrans relativement à celle-ci.

11. Procédé de configuration selon l'une des revendications précédentes, **caractérisé en ce que** la partie d'installation à configurer consiste en l'ensemble des écrans mobiles d'une même façade et/ou d'un même étage du bâtiment.

12. Procédé de configuration selon l'une des revendications précédentes, **caractérisé en ce que** les étapes a) à f) sont itérées pour différentes parties du bâtiment à configurer.

13. Procédé de configuration selon l'une des revendications précédentes, **caractérisé en ce que**, dans l'étape d), l'ordre de commande de mouvement émis n'est pas le même pour tous les actionneurs du groupe d'actionneurs défini par une partie des adresses de la première liste et **en ce que**, dans l'étape e), on désigne les localisations correspondant aux actionneurs de l'ensemble ayant réagi à une commande et la commande à laquelle ils ont réagi.

14. Dispositif de configuration (15), notamment ordinateur, comprenant des moyens matériels (16, 17, IHM) et/ou logiciels, notamment une interface homme-machine (IHM) avec des moyens de saisie et des moyens de visualisation, une mémoire, une unité logique de traitement (16), des moyens de réception d'informations et des moyens (17) de génération et d'émission d'ordres de commande, de mise en oeuvre du procédé de configuration selon l'une des revendications précédentes, notamment les itérations des étapes a), c), d) et f) de la revendication 1.

15. Programme informatique comprenant un moyen de code de programme informatique adapté à la réalisation des étapes du procédé de configuration selon l'une des revendications 1 à 13, lorsque le programme est exécuté sur un ordinateur.

## Patentansprüche

1. Verfahren zur Konfiguration mindestens eines Teils einer Haustechnikanlage (1), die eine Vielzahl von beweglichen Bildschirmen (3) enthält, welche im Bereich von Öffnungen (2) eines Gebäudes angeordnet sind, wobei die Bildschirme von durch eine Adresse identifizierten Stellantrieben (12) gesteuert werden, wobei das Verfahren die folgenden Schritte enthält:
a) einen Schritt der Erstellung einer ersten Liste von Adressen von Stellantrieben der Anlage,
b) einen Schritt der Identifizierung der Gesamtheit der Standorte der den zu konfigurierenden Teil der Anlage bildenden Bildschirme,
c) einen Schritt der Zuordnung einer Liste von möglichen Adressen von Stellantrieben zu jedem Bildschirmstandort,
d) einen Schritt des Sendens eines Bewegungssteuerungsbefehls an jeden Stellantrieb einer Gruppe von Stellantrieben, die von einem Teil der Adressen der ersten Liste definiert wird,
e) einen Schritt der Bestimmung der Standorte, die einer Gruppe von Bildschirmen entsprechen, die auf den Steuerbefehl reagiert haben und/oder sich in einer bestimmten Stellung nach der Bewegungssteuerung befinden,
f) einen Schritt der Aktualisierung der Listen von möglichen Adressen von Stellantrieben für jeden Standort,
wobei die Schritte d) bis f) so lange wiederholt werden, wie mindestens eine Liste von möglichen Adressen von Stellantrieben für einen Bildschirmstandort mehr als eine Stellantriebsadresse enthält.

2. Konfigurationsverfahren nach dem vorhergehenden Anspruch, **dadurch gekennzeichnet, dass** der Schritt der Identifikation der Gesamtheit der Standorte der den zu konfigurierenden Teil der Anlage bildenden Bildschirme einen Schritt der Erzeugung einer grafischen Darstellung des Standorts der Bildschirme des zu konfigurierenden Teils der Anlage enthält.

3. Konfigurationsverfahren nach dem vorhergehenden Anspruch, **dadurch gekennzeichnet, dass** der Schritt der Bestimmung der Standorte, die einer Gruppe von Bildschirmen entsprechen, die auf den Steuerbefehl reagiert haben oder sich in einer bestimmten Stellung nach der Bewegungssteuerung befinden, einen Schritt der Anzeige von diesen im Bereich der grafischen Darstellung enthält.

4. Konfigurationsverfahren nach Anspruch 3, **dadurch gekennzeichnet, dass** die grafische Darstellung des Standorts der Bildschirme mindestens zwei Positionierungsoptionen des Bildschirms umfasst, und dass die Anzeige gleichzeitig den Standort des Bildschirms und die Positionierung des Bildschirms bestimmt.

5. Konfigurationsverfahren nach einem der Ansprüche 2 bis 4, **dadurch gekennzeichnet, dass** die grafische Darstellung Icons enthält, die die beweglichen Bildschirme darstellen, und dass diese Icons verschiebbar sind, um eine visuelle Ähnlichkeit zwischen dem zu konfigurierenden Teil der Anlage und der grafischen Darstellung zu gewährleisten.

6. Konfigurationsverfahren nach einem der vorhergehenden Ansprüche, **dadurch gekennzeichnet, dass** die Gruppe von Stellantrieben, die den Steuerbefehl im Schritt d) empfängt, willkürlich bei einer ersten Durchführung des Schritts d) definiert wird, zum Beispiel ist die Anzahl von Stellantrieben der Gruppe zumindest im Wesentlichen gleich der Hälfte der Anzahl von Adressen der ersten Liste.

7. Konfigurationsverfahren nach einem der vorhergehenden Ansprüche, **dadurch gekennzeichnet, dass** bei einer Wiederholung des Schritts d) die Gruppe von Stellantrieben abhängig von den nach dem Schritt f) erhaltenen Listen definiert wird.

8. Konfigurationsverfahren nach einem der vorhergehenden Ansprüche, **dadurch gekennzeichnet, dass**, wenn die Liste von möglichen Adressen von Stellantrieben für einen Standort nach dem Schritt f) nur eine einzige Adresse enthält, der dieser Adresse entsprechende Stellantrieb aus der Gruppe von Stellantrieben ausgeschlossen wird, die bei einer späteren Ausführung des Schritts d) einen Steuerbefehl empfangen können.

9. Konfigurationsverfahren nach einem der vorhergehenden Ansprüche, **dadurch gekennzeichnet, dass** es einen Schritt des Ausschlusses von Adressen von Stellantrieben der Anlage enthält, die nicht zum zu konfigurierenden Teil der Anlage gehören.

10. Konfigurationsverfahren nach einem der vorhergehenden Ansprüche, **dadurch gekennzeichnet, dass** es einen Schritt der Information enthält, während dessen der Installateur Daten bezüglich des Anlagenteils und des Standorts von Bildschirmen bezüglich dieses Teils eingibt.

11. Konfigurationsverfahren nach einem der vorhergehenden Ansprüche, **dadurch gekennzeichnet, dass** der zu konfigurierende Anlagenteil aus der Gesamtheit der beweglichen Bildschirme der gleichen Fassade und/oder der gleichen Etage des Gebäudes besteht.

12. Konfigurationsverfahren nach einem der vorhergehenden Ansprüche, **dadurch gekennzeichnet, dass** die Schritte a) bis f) für verschiedene zu konfigurierende Teile des Gebäudes wiederholt werden.

13. Konfigurationsverfahren nach einem der vorhergehenden Ansprüche, **dadurch gekennzeichnet, dass** im Schritt d) der ausgegebene Bewegungssteuerungsbefehl nicht für alle Stellantriebe der Gruppe von Stellantrieben gleich ist, die durch einen Teil der Adressen der ersten Liste definiert wird, und dass im Schritt e) die Standorte entsprechend den Stellantrieben der Einheit, die auf eine Steuerung reagiert haben und die Steuerung, auf die sie reagiert haben, bezeichnet werden.

14. Konfigurationsvorrichtung (15), insbesondere Computer, die Hardware- (16, 17, IHM) und/oder Softwareeinrichtungen, insbesondere eine Mensch-Maschine-Schnittstelle (IHM) mit Eingabeeinrichtungen und Anzeigeeinrichtungen, einen Speicher, eine logische Verarbeitungseinrichtung (16), Einrichtungen zum Empfang von Informationen und Einrichtungen (17) zur Erzeugung und zum Senden von Steuerbefehlen, zur Durchführung des Konfigurationsverfahrens nach einem der vorhergehenden Ansprüche, insbesondere die Wiederholungen der Schritte a), c), d) und f) des Anspruchs 1 enthält.

15. EDV-Programm, das eine EDV-Programmcodeeinrichtung enthält, die für die Durchführung der Schritte des Konfigurationsverfahrens nach einem der Ansprüche 1 bis 13 geeignet ist, wenn das Programm in einem Computer ausgeführt wird.

## Claims

1. Method of configuring at least a part of a home automation installation (1) comprising a plurality of mobile screens (3) arranged at openings (2) of a building, the screens being driven by actuators (12) identified by an identifier, the method comprising the following steps:
a) a step of constructing a first list of identifiers of actuators of the installation,
b) a step of identifying all the locations of the screens that make up the part of the installation to be configured,
c) a step of associating a list of possible actuator identifiers with each screen location,
d) a step of transmitting a movement control command to each actuator of a group of actuators defined by some of the identifiers of the first list,
e) a step of designating locations that correspond to a group of screens that have reacted to the control command and/or that are located in a determined position on completion of the movement command,
f) a step of updating the lists of possible actuator identifiers for each location,
the steps d) to f) being reiterated as long as at least one list of possible actuator identifiers for a screen location comprises more than one actuator identifier.

2. Configuration method according to the preceding claim, **characterized in that** the step of identifying the set of screen locations that make up the part of the installation to be configured comprises a step of generating a graphic representation of the location of the screens of the part of the installation to be configured.

3. Configuration method according to the preceding claim, **characterized in that** the step of designating locations that correspond to a group of screens that have reacted to the control command or that are located in a determined position on completion of the movement command comprises a step of pointing to the latter in the graphic representation.

4. Configuration method according to Claim 3, **characterized in that** the graphic representation of the location of the screens includes at least two screen positioning options and **in that** the pointing simultaneously designates the location of the screen and the positioning of the screen.

5. Configuration method according to one of Claims 2 to 4, **characterized in that** the graphic representation comprises icons that represent the mobile screens and **in that** these icons can be moved to ensure a visual resemblance between the installation part to be configured and the graphic representation.

6. Configuration method according to one of the preceding claims, **characterized in that** the group of actuators receiving the control command in the step d) is defined randomly during a first application of the step d), for example the number of actuators of the group is at least substantially equal to half the number of identifiers in the first list.

7. Configuration method according to one of the preceding claims, **characterized in that**, during a reiteration of the step d), the group of actuators is defined according to the lists obtained on completion of the step f).

8. Configuration method according to one of the preceding claims, **characterized in that** when the list of possible actuator identifiers for a location contains only a single identifier on completion of the step f), the actuator that corresponds to this identifier is excluded from the group of actuators likely to receive a control command during a subsequent execution of the step d).

9. Configuration method according to one of the preceding claims, **characterized in that** it comprises a step of excluding identifiers of actuators of the installation that do not belong to the part of the installation to be configured.

10. Configuration method according to one of the preceding claims, **characterized in that** it comprises an information step during which the installer enters data relating to the installation part and to the location of screens relative to the latter.

11. Configuration method according to one of the preceding claims, **characterized in that** the installation part to be configured consists of the set of mobile screens of one and the same façade and/or one and the same floor of the building.

12. Configuration method according to one of the preceding claims, **characterized in that** the steps a) to f) are reiterated for different parts of the building to be configured.

13. Configuration method according to one of the preceding claims, **characterized in that**, in the step d), the movement control command transmitted is not the same for all the actuators of the group of actuators defined by a part of the identifiers of the first list and **in that**, in the step e), the locations that correspond to the actuators of the set that have reacted to a command and the command to which they have reacted are designated.

14. Configuration device (15), in particular a computer, comprising hardware means (16, 17, HMI) and/or software means, particularly a human-machine interface (HMI) with input means and display means, a memory, a processing logic unit (16), information reception means and means (17) for generating and transmitting control commands, of applying the configuration method according to one of the preceding claims, particularly the iterations of the steps a), c), d) and f) of Claim 1.

15. Computer program comprising a computer program code means suitable for implementing the steps of the configuration method according to one of Claims 1 to 13, when the program is executed on a computer.
